# EUROPEAN PATENT SPECIFICATION

(11) **EP 1 502 313 B1**
(45) Date of publication and mention of the grant of the patent: **15.02.2012**
(21) Application number: 03747307.1
(22) Date of filing: 23.04.2003
(51) Int. Cl.: H01M 2/00, H01M 8/02

(54) **MEMBRANE BASED ELECTROCHEMICAL CELL STACKS**
ELEKTROCHEMISCHE ZELLENSTAPEL AUF MEMBRANBASIS
EMPILEMENT DE CELLULES ELECTROCHIMIQUES A BASE DE MEMBRANE

(30) Priority: 23.04.2002 US 374631 P
(43) Date of publication of application: 02.02.2005
(73) Proprietor: Protonex Technology Corporation, Southborough, MA 01772-1034 (US)
(72) Inventor: OSENAR, Paul, Westford, MA 01886 (US); SABIN, Paul, Needham, MA 02194 (US); ENAYETULLAH, Mohammad, Sharon, MA 02067-3120 (US); FORMATO, Richard, M., Grafton, MA 01519 (US)
(74) Representative: Adam, Holger
(86) International application number: PCT/US2003/012684
(87) International publication number: WO 2003/092096

(56) References cited:
- JP-A- 11 233 128
- US-A- 4 371 433
- US-A- 5 527 363
- US-A- 5 527 363
- US-A- 6 057 054
- US-A1- 2002 028 370
- US-A1- 2002 117 780
- US-B1- 6 180 274
- US-B1- 6 413 664

## Description

### FIELD OF INVENTION

This invention relates to membrane-based electrochemical cells, and more particularly, to proton exchange membrane (PEM) fuel cell stacks. The present invention also describes novel processes for producing these PEM fuel cell stacks.

### BACKGROUND OF THE INVENTION

Membrane based electrochemical cells, and particularly, proton exchange membrane (PEM) fuel cells are well known. PEM fuel cells convert chemical energy to electrical power with virtually no environmental emissions and differ from a battery in that energy is not stored, but derived from supplied fuel. Therefore, a fuel cell is not tied to a charge/discharge cycle and can maintain a specific power output as long as fuel is continuously supplied. The large investments into fuel cell research and commercialization indicate the technology has considerable potential in the marketplace. However, the high cost of fuel cells when compared to conventional power generation technology deters their widespread use. The cost of fabricating and assembling fuel cells can be significant, due to the materials and labor involved. Indeed, as much as 85% of a fuel cell's cost can be attributed to manufacturing.

A single cell PEM fuel cell consists of an anode and a cathode compartment separated by a thin, ionically conducting membrane. This catalyzed membrane, with or without gas diffusion layers, is often referred to as a membrane electrode assembly ("MEA"). Energy conversion begins when the reactants, reductants and oxidants, are supplied to the anode and cathode compartments, respectively, of the PEM fuel cell. Oxidants include pure oxygen, oxygen-containing gases, such as air, and halogens, such as chlorine. Reductants, also referred to herein as fuel, include hydrogen, natural gas, methane, ethane, propane, butane, formaldehyde, methanol, ethanol, alcohol blends and other hydrogen rich organics. At the anode, the reductant is oxidized to produce protons, which migrate across the membrane to the cathode. At the cathode, the protons react with the oxidant. The overall electrochemical redox (reduction/oxidation) reaction is spontaneous, and energy is released. Throughout this reaction, the PEM serves to prevent the reductant and oxidant from mixing and to allow ionic transport to occur.

Current state of the art fuel cell designs comprise more than a single cell, and in fact, generally combine several MEAs, flow fields and separator plates in a series to form a fuel cell "stack"; thereby providing higher voltages and the significant power outputs needed for most commercial applications. Flow fields allow for the distribution of the reactants through the fuel cell and are typically separate from the porous electrode layers within the fuel cell. Depending on stack configuration, one or more separator plates may be utilized as part of the stack design to prevent mixing of the fuel, oxidant and cooling input or exhaust streams within the fuel cell stack. Such separator plates also provide structural support to the stack.

Bipolar plates perform the same function as an oxidant flow field, fuel flow field and separator plate in combination and are often used in the design of fuel cells as their use can reduce the number of components required in the functioning fuel cell. These bipolar plates contain an array of channels formed in the surface of the plate contacting an MEA which function as the flow fields. The lands conduct current from the electrodes while the channels between the lands serve to distribute the reactants utilized by the fuel cell and facilitate removal of liquid reaction by-products, such as water. Fuel is distributed from the fuel inlet port to the fuel outlet port, as directed by the channels, on one face of the bipolar plate, while oxidant is distributed from the oxidant inlet port to the oxidant outlet port, as directed by the channels, on the opposing face of the bipolar plate, and the two faces are not connected through the plate. In the fuel cell stack, each bipolar plate serves to distribute fuel to one MEA of the stack through its fuel flow field face while distributing oxidant to a second MEA through the its opposite oxidant flow field face. The particular design of the bipolar plate flow field channels may be optimized for the operational parameters of the fuel cell stack, such as temperature, power output, and gas humidification. Ideal bipolar plates for use in fuel cell stacks are thin, lightweight, durable, highly conductive, corrosion resistant structures such as carbon/polymer composites, graphite or certain metals.

In the flow fields, the lands conduct current from the electrodes, while the grooves between the lands serve to evenly distribute the reactants utilized by a fuel cell, such as hydrogen, oxygen or air, over the faces of the electrodes. The channels formed by the lands and grooves also facilitate removal of liquid reaction byproducts, such as water. A thin sheet of porous paper, cloth or felt, usually made from graphite or carbon, may be positioned between each of the flow fields and the catalyzed faces of the MEA to support the MEA where it confronts grooves in the flow field to conduct current to the adjacent lands, and to aid in distributing reactants to the MEA. This thin sheet is normally termed a gas diffusion layer ("GDL"), and can be incorporated as part of the MEA.

Fuel cell stacks may also contain humidification channels within one or more of the coolant flow fields. These humidification channels provide a mechanism to humidify fuel and oxidants at a temperature as close as possible to the operating temperature of the fuel cell. This helps to prevent dehydration of the PEM as a high temperature differential between the gases entering the fuel cell and the temperature of the PEM causes water vapor to be transferred from the PEM to the fuel and oxidant streams.

Of necessity, certain stack components, such as the GDL portion of the MEA, are porous in order to provide for the distribution of reactants and byproducts into, out of, and within the fuel cell stack. Due to the porosity of elements within the stack, a means to prevent leakage of any liquid or gases between stack components (or outside of the stack) as well as to prevent drying out of the stack elements due to exposure to the environment is also needed. To this end, gaskets or other seals are usually provided between the surfaces of the MEA and other stack components and on portions of the stack periphery. These sealing means, whether composed of elastomeric or adhesive materials, are generally placed upon, fitted, formed or directly applied to the particular surfaces being sealed. These processes are labor intensive and not conducive to high volume manufacturing, thereby adding to the high cost of fuel cells. Additionally, the variability of these processes results in poor manufacturing yield and poor device reliability.

Fuel cell stacks range in design depending upon power output, cooling, and other technical requirements, but may utilize a multitude of MEAs, seals, flow fields and separator plates, in intricate assemblies that result in manufacturing difficulties and further increased fuel cell costs. These multitudes of individual components are typically assembled into one sole complex unit. The fuel cell stack is formed by compressing the unit, generally through the use of end plates and bolts, although banding or other methods may be used, such that the gaskets seal and the stack components are held tightly together to maintain electrical contact there between. These conventional means of applying compression add even more components and complexity to the stack and pose additional sealing requirements.

Other disadvantages observed in connection with some conventional fuel cell stacks are electrical in nature. For example, depending upon the configuration of the fuel cell and the degree of exposure of the MEA to the reactants and waste streams in the various manifolds providing reagents and coolants to the flow fields, a cross-cell potential problem may arise. In particular, if the exposure of the MEA to those reagents is significant, there may be a "shorting-out" of the MEA layer, thus resulting in poor performance of the fuel cell overall. Also, exposure of the MEA to some potential cooling fluids can be detrimental to the membrane portion. For example, in certain combinations of MEA and coolant, the coolant is capable of solvating or swelling the exposed portions of the membrane which can induce damage to the MEAs.

Various attempts have been made in the fuel cell art to address these deficiencies in fuel cell stack assembly design and thereby lower manufacturing costs. However, most require manual alignment of the components, active placement of the sealing means and/or a multi-step process.

Certain conventional processes are described in U.S. Patent No. 6,080,503, to Schmid et al., U.S. Patent No. 4,397,917, to Chi et al., and U.S. Patent No. 5,176,966, to Epp et al. However, notable disadvantages have been associated with such conventional processes.

For example, U.S. Patent No. 6,080,503, to Schmid et al. describes the replacement of gasket based seals within certain portions of the stack with an adhesive based material in the form of tapes, caulks or layers. However, assembly of that stack still requires manual alignment of the components during the adhesion process, in a manner not unlike caulking a seal, and sealing only occurs at those interfaces where adhesive has been applied through active placement.

Similarly, U.S. Patent No. 4,397,917, to Chi et al., describes the fabrication of subunits within a fuel cell stack and is reported to provide ease in handling and testing. However, this design relies on conventional sealing among the components and between subunits. In addition, no manifolds internally penetrate the subunit.

See also, U.S. Patent No. 5,176,966, to Epp et al., for its method of forming at least some of the required gaskets directly into the fuel cell stack assembly; and U.S. Patent No. 5,264,299, to Krasij et al., which describes a fuel cell module having a PEM interposed between the two porous support layers which distribute reactant to the catalyst layers in which the peripheral portion of the support layers are sealed with an elastomeric material such that the PEM is joined with the support layers and the open pores of the support layers are filled with the elastomeric material making it fluid impermeable.

Among further prior art, US 6,057,054 discloses an improved MEA comprising coextensive ion exchange membrane and electrode layers and a resilient fluid impermeable integral seal made by impregnating a sealing material into the porous electrode layers in the sealing regions. The integral seal preferably circumscribes the electrochemically active area of the MEA. In addition, the integral seal preferably extends laterally beyond the edge of the MEA, enveloping the peripheral region including the side edge of the MEA. The uncured sealant material is preferably a flow processable elastomer that is applied to the MEA using a vacuum injection molding process. In preferred embodiments, the seal has a plurality of spaced, parallel raised ribs with cross-ribs extending therebetween at spaced intervals. The parallel raised ribs and cross-ribs provide compartmentalized seals that provide improved protection against fluid leaks.

Among further prior art, US 5,527,363 discloses an embossed fluid flow field plate for electrochemical cells comprising two sheets of compressible, electrically conductive material. Each sheet has two oppositely facing major surfaces. At least one of the major surfaces has an embossed surface which has a fluid inlet formed therein. The embossed surface has at least one open-faced channel embossed therein extending from the fluid inlet for conducting pressurized fluid introduced at the fluid inlet. A metal sheet is interposed between each of the compressible sheets. The compressible, electrically conductive sheet preferably comprises graphite foil. Furthermore, US 5,527,363 discloses a method of fabricating an embossed separator plate for use in conjunction with an electrochemical fuel cell comprising (1) providing two sheets of compressible, electrically conductive sheet material, (2) interposing a metal sheet between each of the compressible sheets, and (3) embossing an open-faced channel in at least one of the surfaces of the sheets facing away from the metal sheet.

Among further prior art, JP 11-233128 discloses a fuel cell provided with a first and second separators for sandwiching a cell of the fuel cell. The first separator has a fuel gas passage, and is provided with a first circumferential turning groove part surrounding the fuel gas passage, i.e., surrounding an anode side electrode. A first extensible pipe body is arranged in the first circumferential groove part, and the first pipe body is brought into close contact with an electrolyte film. A second circumferential turning groove part is provided surrounding a cathode side electrode in the second separator, and a second extensible pipe body is arranged in the second circumferential turning groove part to be brought into close contact with the electrolyte film.

Additionally, World Publication WO 02/093672 describes a process for sealing fuel cell stacks via the injection of liquid resin. The reported process requires that all of the stack components be assembled first; then seals are introduced to produce the fuel cell stack. While that process may offer certain improvements to those previously described state of the art methods for forming fuel cell stacks, several deficiencies remain. In practice, for example, the process requires high injection pressures and is associated with slow fill times. High injection pressures further require component designs that protect the more fragile components of the stack (i.e. MEA). Another notable disadvantage is that a significantly large area of the each layer is necessarily sacrificed due to the sealing process itself.

Still further, in traditional fuel cell cassettes, two types of MEAs dominate; MEAs in which 1) the membrane extends beyond the borders of the gas diffusion layers, and 2) the gasket materials are formed into the edges of the MEA itself (with the membrane and GDLs approximately of the same size and shape, see for example US 6,423,439 to Ballard). In the first type, separate gasket materials are used to seal between the membrane edge extending beyond the GDL and the other part of the stack (bipolar plates). In the second type, it is possible to seal directly to the other parts of the stack. Each of these methods requires compression to make a seal. These compressive-based seals require that all the components in the stack have high precision such that a uniform load is maintained. MEA suppliers have become accustomed to supplying the MEA formats above.

In our previous patent applications, we have reported on an innovative fuel cell stack design which assembles together individual modules to form a fuel cell stack of requisite power output where each module permanently binds a number of unit cells together (see, World Publication WO 02/43173 based on U.S. Patent application serial number 09/908,359).

Briefly, WO 02/43173 details a three-step process for the formation of fuel cell cassettes which included the following:
1) Sealing of unused manifold openings/ports on each of the particular flow fields (fuel, oxidant, and coolant). For example, in the case of the oxidant flow field, ports utilized for the distribution of fuel and coolant (on other layers) must be sealed about their perimeter to prevent the mixing of these input streams.
2) Sealing of all the ports within the membrane electrode assemblies (MEA) to prevent the leakage of the reactants within the MEA layers.
3) Layering these components (appropriately sealed as described) within a mold or fixture in a method prescribed by the particular stack design. Once the pieces are assembled within the fixture, a resin is introduced about the periphery. Using vacuum transfer molding or injection molding techniques, the resin is forced into the edges of the cassette assembly. Once hardened, it provides structural support and edge sealing over the assembly.

The resulting fuel cell cassette is then transformed into a fuel cell stack with the addition of end plates. Such a construction provides appropriate manifolding and a means of compression.

We also have developed innovative methods for sealing manifold ports within the stack or a module thereof, as well as methods for sealing the stack or module periphery that are less labor intensive and more suitable to high volume manufacturing processes (see, U.S. provisional patent application serial number 60/337,851 ).

Despite even our own advancements in the field, it would be desirable to provide an improved fuel cell stack design that is less complex, more reliable, and less costly to manufacture. Additionally, it would be highly desirable to provide a method of making fuel cell cassettes utilizing roll-to-roll production of MEA, particularly, as this would greatly reduce the cost of this component. It also would be highly desirable to develop improved fuel cell cassettes which minimize or prevent exposure of the MEA to the reactants, waste streams, or cooling fluids around the various manifolds, thus avoiding cross-cell potential problems or material incompatibility associated with that exposure. Still further, it would be highly desirable to develop improved fuel cell stacks which can be formed at reduced injection pressures to simplify component design and which do not require that a significantly large area of the each layer to be sacrificed to accommodate the sealing process.

### SUMMARY OF THE INVENTION

The present invention provides notable improvements over conventional stacks and related processes, including those described above. In particular, the present invention provides improved electrochemical cassettes and fuel cell cassettes, including fuel cell stacks utilizing bipolar plates. Each sealed stack module, referred to herein as a "fuel cell cassette" or "electrochemical cassette" is an assembly of electrochemical components which has bonded internal manifolding and is sealed to form a self-contained unit. These electrochemical or fuel cell cassettes may be designed to achieve standardized specifications.

The invention comprises, an electrochemical cassette, in accordance with claim 1.

Through the number, shape, and placement of sealant holes (optional) and channels cut or otherwise formed within the bipolar plate components of the fuel cell stack, sealing resin is introduced into the assembly to seal the perimeter of the assembly and to seal certain manifold ports within the assembly. Improved fuel cell stacks of the present invention can be manufactured from conventional fuel cell components and can utilize both injection molding and vacuum assisted resin transfer molding processes.

The present invention allows for the fabrication of fuel cell stacks with a minimum of labor, thereby dramatically reducing their cost and allowing for process automation. In addition, in the present invention the manifold openings are sealed by adhesion of the sealant to the fuel cell components, not by compression of the endplates or other compression means. This reduces the compression required on the final stack, improves the reliability of the seals, improves electrical contact and allows for the use of a wider variety of resins. Further, end plates may be molded into the fuel cell cassette thereby producing an entire stack (e.g., fuel cell cassette and end plates) in one step.

In one preferred embodiment, the present invention provides fuel cells having an MEA in which the GDL and membrane are of substantially the same general outline as each other and of the overall stack profile. One advantage of these fuel cells is the ability to directly use a roll-to-roll MEA without requiring any post processing.

By way of illustration, the sealing process occurs as follows. Sealant that travels through channels cut in the bipolar plates must not only bond to the adjacent MEA to create a seal but also penetrate the porous GDL portion to provide a gas and/or liquid tight seal between the bipolar plate and the non-porous ion conducting membrane. More particularly, only sealing to the surface of the GDL on the MEA may allow the reactant to travel through the GDL into areas of the stack that were intended to be sealed. This is of particular importance with the use of gaseous reactants (i.e. hydrogen), where the porosity of the GDL may allow significant escape. This may or may not be an issue in the case of liquid reactants (i.e. methanol) depending upon the nature of the fuel and the GDL.

In another preferred embodiment, the present invention provides fuel cells having a composite MEA. The composite MEA preferably comprises a gasket affixed to the periphery of the MEA laminate structure. In preferred fuel cells comprising the composite MEA, the outline of the peripheral gasket is approximately the same size as the outline of the stack profile. The active portion of the MEA being located roughly in alignment with the reactant flow fields above and below in the assembled stack. In such embodiments, the sealant channel(s) of the bipolar plate are typically aligned with at least a portion of the gasket portion of the composite MEA. In that way, undesirable exposure of the MEA to reactants, waste or coolant streams in the various manifolds is minimized or eliminated, thus avoiding cross-cell potential problems.

Preferred methods for producing cassettes of the invention generally comprise providing the various components of the cassette (e.g., one or more MEAs and plates, each comprising respective manifold openings, as further described herein) in a size and number suitable for the intended application, assembling the components in a design configuration to support output requirements for that application; and introducing a sealant into certain channels cut into the plates. By sealing those channels, certain manifold openings which are not intended to deliver material to a particular flow field are selectively blocked, thus preventing or at least substantially reducing undesirable flow. In addition, the sealant can also encapsulate the perimeter of the assembly contemporaneously with the sealing of the channels.

Related aspects of the invention are discussed infra.

### BRIEF DESCRIPTION OF THE DRAWINGS

FIGURE 1 is a pictorial view of one embodiment of a fuel cell of the present invention;
FIGURE 2 is a photographic image of the fuel flow field face MEA after port sealing (disassembled from the cassette) in accordance with the present invention;
FIGURE 3 is a pictorial top view of the fuel flow field face of a bipolar plate of the present invention;
FIGURE 4 is pictorial view of an embodiment of a sealing groove and sealant hole design not in accordance (with the present invention);
FIGURE 5 is a pictorial view of another embodiment of a sealing groove and sealant hole design (not in accordance with the present invention);
FIGURE 6 is a pictorial view of yet another embodiment of a sealing groove and sealant hole design for use with the present invention;
FIGURE 7 is an exploded, schematic view of a simple fuel cell assembly for use with the present invention;
FIGURE 8 is a photographic image of a fuel cell assembly within the mold and prior to encapsulation;
FIGURE 9 is a schematic top and side view of a fuel cell cassette of the present invention having bonded endplates;
FIGURE 10 is a cut away view of a channel seal adjacent to the GDL portion of the MEA;
F1GURE 11 is a cut away view of a channel seal adjacent to the edge gasket of an MEA;
FIGURE 12 is a cut away view of a channel seal adjacent to both the GDL and edge gasket of the MEA;
FIGURE 13 is a pictorial top view of a composite MEA having a gasket region about the periphery of the MEA;
FIGURE 14 is a pictorial view of an MEA having manifold openings which are substantially the same size as the area surrounding the manifold openings defined by the sealant after blinding of the GDL portion of the MEA in the sealing operation;

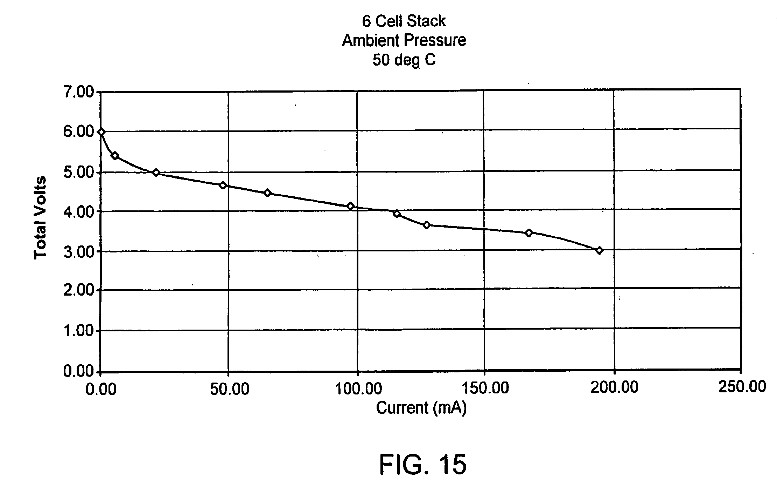

FIGURE 15 is a plot of the current and voltage curve of the fuel cell cassettes made via the processes described in Example 1;

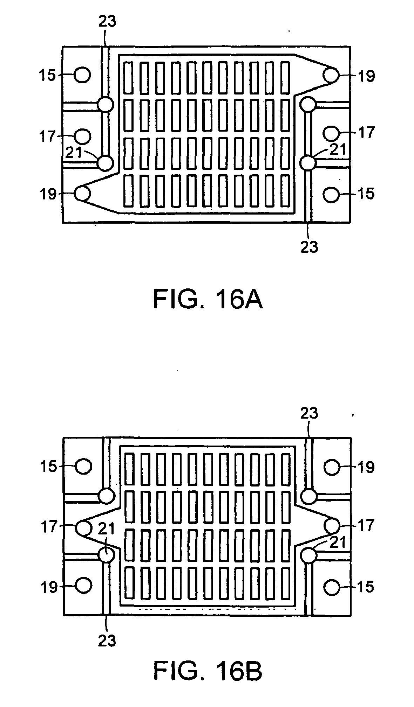

FIGURES 16A-B are schematic views of a bipolar plate oxidant or fuel flow field (FIGURE 16A) and a coolant flow field (FIGURE 16B); and
FIGURE 17 is an exploded, schematic view of a repeat unit for a typical fuel cell cassette of the invention having one coolant flow field and two fuel cell unit cells (including an MEA, an oxidant flow field and a fuel flow field).

### DETAILED DESCRIPTION OF THE INVENTION

The present invention provides a variety of cassettes suitable for use in electrochemical applications. As noted above, cassettes of the invention are particularly well suited for use in fuel cells.

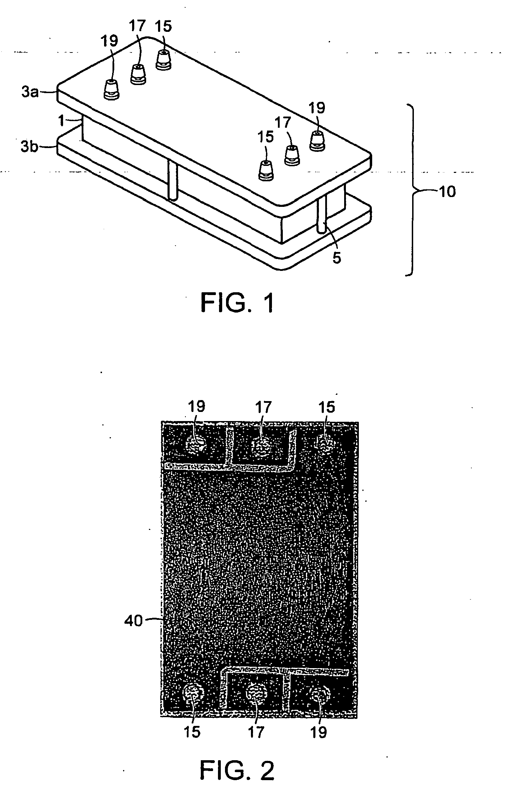

**FIG. 1** shows one embodiment of a fuel cell stack **10** of the present invention. A fuel cell cassette **1,** formed according to the methods described herein and comprising any number of MEAs, coolant flow fields, and bipolar plates, is interposed between a top and bottom endplate **3a** and **3b** through a compression means **5.** The fuel cell cassette may also utilize terminal plates or end plates at the top and bottom of the cassette, such terminal plates consisting of one-half of a bipolar plate structure (i.e. one flow field face only). MEAs may be fabricated from materials known in the art or purchased commercially. In the preferred embodiment, the MEA is manufactured by hot-pressing catalyzed carbon paper onto both sides of a NAFION perfluorinated sulfonic acid membrane (available commercially from E.I. DuPont de Nemours and Company, U.S.A.). Fuel 15, oxidant 19, and coolant 17 inputs and outputs are also shown.

In one preferred embodiment, all of the fuel cell components are cut to roughly the same shape perimeter. Two series of manifold openings or ports, an inlet opening and an outlet opening for each reactant flow, are cut in the MEAs and bipolar plates to provide manifolding for fuel and oxidant flow through the cassette. In an alternative embodiment, one or more coolant flow fields are also utilized, in which instance, an additional series of ports are cut in each component to provide for coolant input and output flow through the cassette. Sealing grooves are cut in each of the bipolar plates, and coolant flow fields if applicable, through which a sealant can be guided to close off unused ports contemporaneously with the sealing of the entire fuel cell assembly to form the fuel cell cassette. Using the shape and placement of the sealing grooves in each of the components, sealant flow into the component can be controlled. Grooves are not cut to surround ports that are not to be sealed on a particular layer.

Depending upon the length and geometry of the grooves, sealant flow from the edge of the assembly may not be adequate to completely seal off a port. In such instances, sealant holes are cut into the components and are utilized to draw additional sealant directly into the sealing grooves.

Due to the porous nature of the GDL within the MEA, sealant introduced into the sealing grooves of the bipolar plate interpenetrates the GDL to seal the manifold ports of the MEA. A photographic image of the fuel flow field face of an MEA 40 after sealing is shown in FIG. 2 wherein the MEA 40 has been cut from the cassette to show that the oxidant 19 and coolant 17 ports are sealed and the fuel ports 15 remain open. In conventional processes, the polymer membrane is required to extend past the GDL to provide a frame for sealing purposes. Consequently, this results in increased manufacturing costs. In contrast, the present invention allows sealing to occur when the GDL and polymer membrane are of substantially the same size and shape. This is advantageous as the MEAs used in the present invention may be fabricated on a continuous basis with the associated reduction in manufacturing costs.

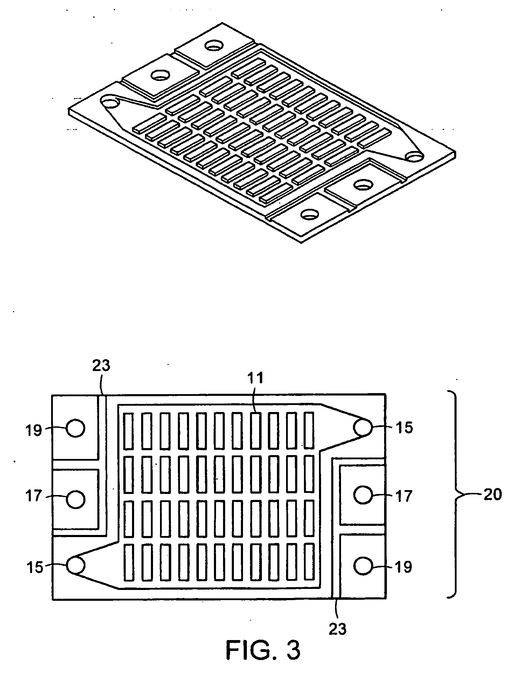

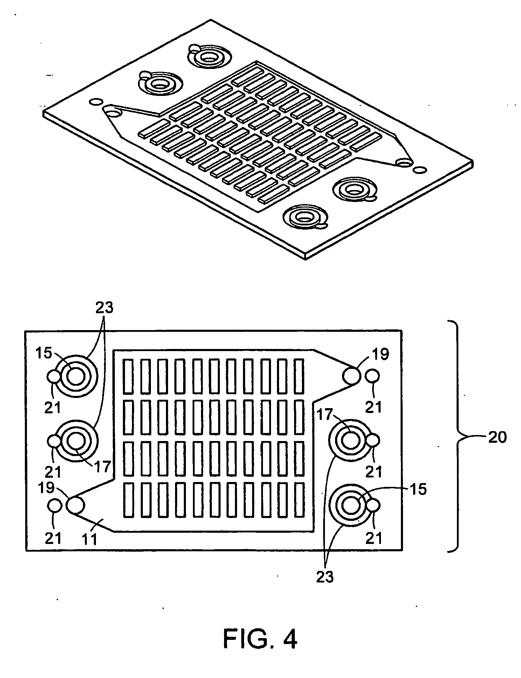

**FIG. 3** shows a preferred embodiment of a bipolar plate having sealing grooves cut therein. The sealing grooves **23** are added to each side of the bipolar plate **20.** Such sealing grooves **23** are not connected to the flow field channel pattern **11** on the bipolar plate **20** face as the flow field channel pattern **11** must remain unhindered to provide for proper reactant flow through the cassette. These sealing grooves **23** are designed such that in the fuel flow field face of the bipolar plate **20,** the fuel ports **15** remain open to distribute fuel while the remaining oxidant **19** and coolant **17** ports are sealed. In the opposing oxidant flow field face of the bipolar plate **20,** the oxidant ports **19** remain open to distribute oxidant while all other ports are sealed. In **FIG. 4****,** the oxidant flow field face of the bipolar plate **20** is shown. Therefore, sealing grooves **23** surround the fuel inlet and outlet ports **15** and the coolant inlet and outlet ports **17,** but not the oxidant inlet and outlet ports **19.**

Not in accordance with the invention:

Referring now to **FIG. 4****,** an alternative sealing groove **23** and sealant hole **21** design for a bipolar plate **20** is shown wherein sealant holes **21** are used and sealant is drawn (or pushed) from the sealant hole **21** into the sealing grooves **23** surrounding the fuel ports **15** and coolant ports **17** and sealant is drawn from the periphery of the assembly only to seal the periphery of the components. Sealant holes must also be added to the MEAs.

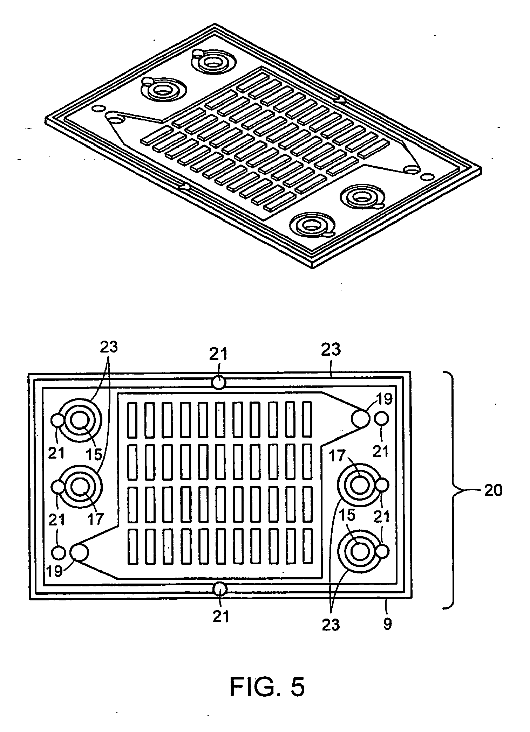

Another embodiment (not in accordance with the invention) of a sealing groove and sealant hole pattern is shown on a bipolar plate **20** in **FIG. 5****.** As shown, sealant is drawn from the sealant holes **21** to seal the fuel ports **15** and coolant ports **17.** The perimeter **9** and the sealing grooves **23** surrounding the ports are isolated from the sealing groove about the periphery **9** of the assembly. In this embodiment, bonding of the perimeter does not require external encapsulation of the entire assembly, which may be advantageous for heat removal.

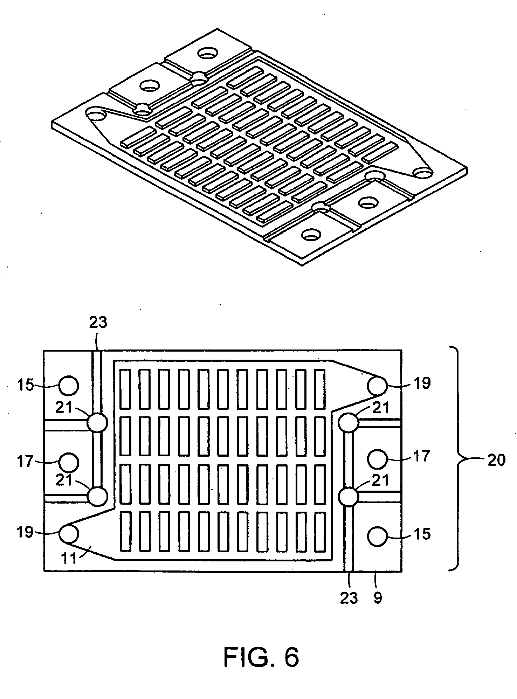

**FIG. 6** depicts yet another embodiment of a sealing channel and sealant hole pattern in which the sealing grooves **23** are fed sealant from both the periphery **9** and through sealant holes **21** to seal the fuel ports **15** and coolant ports **17.**

Once suitable sealant holes and/or sealing channels are cut or otherwise formed in each of the fuel cell components as described above, the components are assembled according to the desired cassette design and output requirements. Assembly of a fuel cell stack utilizing bipolar plates could include the use of terminal plates which incorporate one-half of a bipolar plate structure, i.e. only one flow field face.

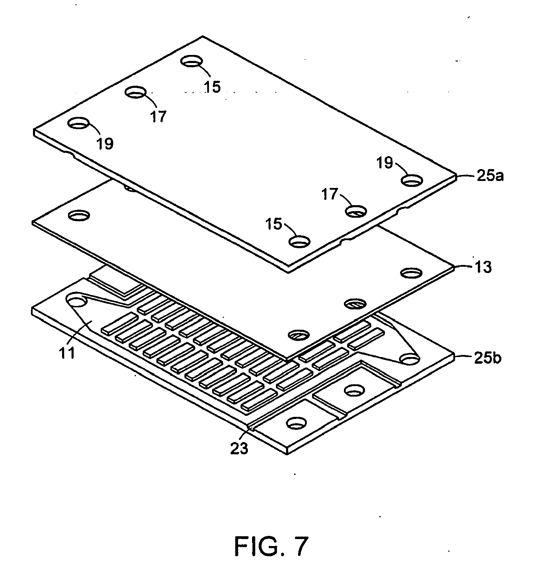

In a very basic assembly design, as shown in **FIG. 7****,** an MEA **13** is interposed between two terminal plates **25a** and **25b.** However, in another preferred embodiment the assembly design comprises, in this order, a terminal plate, an MEA, a bipolar plate, a second MEA, and a second terminal plate.

Additional bipolar plates and MEAs may be added to the cassette assembly, with or without the addition of cooling layers depending upon the output requirements for the finished fuel cell. Typically, fuel cells having a plurality of MEAs comprise a repeat unit having a between 1 and about 10 MEAs interposed between coolant layers. More typically there are between about 2 and about 4 MEAs interposed between coolant layers which strikes a balance between maximizing MEA density and maintaining a sufficient heat removal throughout the cassette or stack.

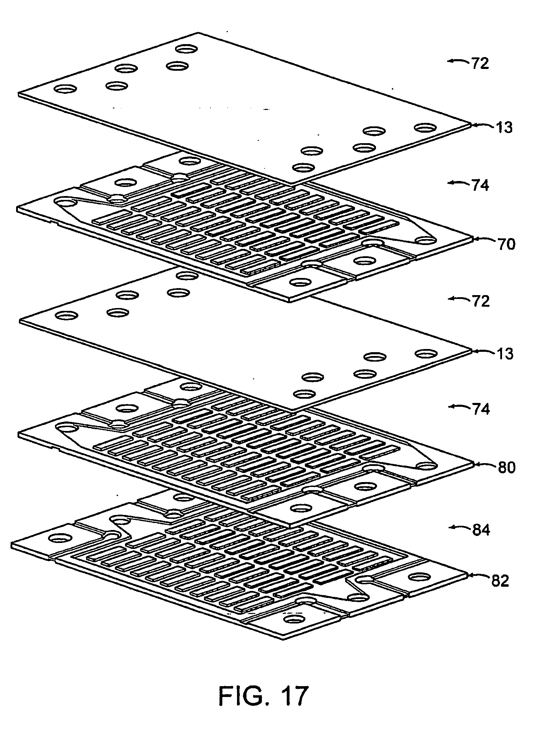

Now referring to **FIG. 17****,** a particularly preferred repeat unit is depicted having two MEAs **13** interposed between adjacent coolant flow fields **84.** The repeat unit comprises two MEA layers **13,** one bipolar plate **70** having a fuel flow field **72** and an oxidant flow field **74,** two bipolar plates **80** (and **82)** having a coolant flow field **84** and either an oxidant flow field **74** (or a fuel flow field **72**). Thus, bipolar plates **80** and **82** are related by a mirror plate running through the center manifold ports at either end of the plate. This coolant flow field **84** is substantially symmetric. The flow field on the opposite face of bipolar plates **80** and **82** is asymmetric and will form either a fuel flow field or an oxidant flow field depending upon whether the coolant flow field is the "up" surface, i.e., plate **82,** or the "down" surface, i.e., plate **80.** While the skilled artisan with recognize that other arrangements and structures of coolant flow fields may be readily determined and are within the scope of the invention, the structure shown in **FIG.17** is amenable to larger volume production at a reduced cost because there are fewer components and only two types of bipolar plates (e.g., plates **80** and **70**).

For use in fuel cell applications, cassettes of the invention are typically utilized in the form of a stacked assembly comprising the following components: membrane electrode assemblies (MEA), flow fields, and separator plates.

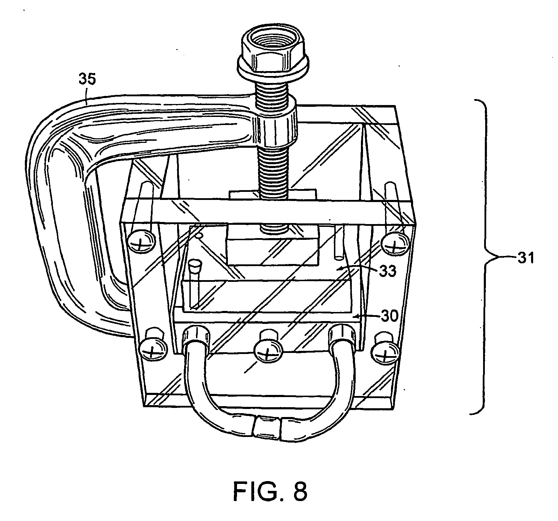

Although example assembly designs have been described, those skilled in the art will recognize that fuel cells can have any desired number of components assembled together depending upon the output requirements of the final fuel cell cassette. Regardless of the particular design, the components are assembled such that the ports of each component in the assembly are aligned with the ports of the other components. As shown in **FIG. 8****,** the assembly **30** is placed within a mold or cavity **31** and held in place within the mold by a top plate **33** with an appropriate means of compression **35,** such as a simple clamp or bolt pattern. If sealant holes are utilized, the top plate will also contain holes through which the sealant can be introduced into the assembly.

To seal the fuel cell cassette assembly described above using vacuum assisted resin transfer molding techniques, a sealant is introduced around the perimeter and into the sealant holes of all assembled components. A vacuum is pulled through each of the ports within the assembly. The pressure differential pulls sealant into the edges of the assembly thereby sealing the periphery of the components in the assembly together and forming the assembly into a finished fuel cell cassette. In addition, the same pressure differential pulls the sealant into the grooves cut in the bipolar plate. If sealant holes are present, the pressure differential pulls or otherwise draws the sealant through the sealant holes into the grooves. Sealant also permeates the GDLs of the adjacent MEAs from the grooves and edges. The perimeter and port sealing is complete when the sealant flows through the grooves to meet and seal off the appropriate ports and blinds the adjacent portions of the MEA. Throughout the cassette assembly, each flow field is appropriately sealed such that only the manifold ports of interest remain open on each individual layer. The remaining ports are selectively blocked/enclosed by the grooves that are now sealed. The edges of the assembly are also encapsulated by sealant. The pressure differential and time required to accomplish the sealing process is a function of the materials used for the components and the sealant, including but not limited to the shape of the sealing grooves, the viscosity and flow characteristics of the sealant, and the type of gas diffusion layer used in the MEA.

Alternatively, one can use pressure assisted resin transfer to push a low viscosity sealant into the sealant holes and / or around the periphery of the assembly. Two part thermoset resins with a viscosity of under 150 Pa_{·}s (150,000 cP), more preferably under 100 Pa·s (100,000 cP), allow filling of the sealing channels and the stack exterior with a minimum of driving pressure <6.89·1,0⁴ Pa (<10 PSI) in very short fill times (<1 minute). In addition, design of the fuel cell components and the sealing channels is not complicated by the ramifications of high pressure filling techniques and tighter tolerances typically required.

To seal a fuel cell cassette using injection molding techniques, sealant is mechanically forced around the periphery of the assembly and into any sealant holes. In a preferred embodiment, a thermoset resin is utilized as the sealant and is injected into the injection holes and around the edges of the assembly and allowed to harden prior to removal of the fuel cell cassette from the mold. In another embodiment, a thermoplastic resin is utilized as the sealant. The sealant is injected into the injection holes and around the edges of the assembly and allowed to cool and harden prior to removal of the fuel cell cassette from the mold. A mold capable of accommodating the associated temperature and pressure is utilized.

Thus, methods of fabricating fuel cells and related electrochemical cassettes provided herein permit rapid prototype design and optimization. These fabrication methods are additionally suitable for low to medium volume production of electrochemical or fuel cell cassettes (i.e., <100,000 units) using either resin transfer or low pressure injection molding techniques. In particular, cassettes of the invention can be produced at reduced/low pressures. In addition, cassettes of the invention have an increased electrochemically active cross-section for a given cassette size. That is, less of the cassette has to be utilized (sacrificed) for sealing purposes.

The reduced cross-sectional area required of the low pressure sealing techniques of the invention permits greater flexibility in reagent delivery and removal from flow fields within the cassettes. Consequently, reagent depletion in the flow field is reduced or eliminated. Thus, for example, each flow field could be supplied with a reagent from two or more reagent manifolds and waste could be removed from the flow field via two or more exhaust manifolds.

Increased flow field design flexibility further permits increased cassette efficiency and further allows for scalability of cassette design. That is, the invention contemplates cassettes having larger or smaller power outputs generated from cassettes which are typically smaller than existing fuel cell stacks with a similar power output.

The sealant used for periphery and port sealing is selected such that it has the required chemical and mechanical properties for the conditions found in an operating fuel cell system, including but not limited to temperature stability. Suitable sealants include both thermoplastics and thermoset elastomers. Preferred thermoplastics include thermoplastic olefin elastomers, thermoplastic polyurethane, plastomer, polypropylene, polyethylene, polytetrafluoroethylene, fluorinated polypropylene and polystyrene. Preferred thermoset elastomers include epoxy resins, urethanes, silicones, fluorosilicones, and vinyl esters.

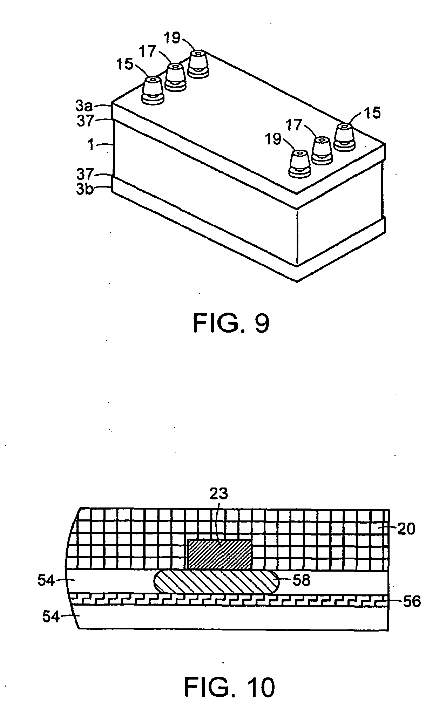

In an alternate embodiment shown in **FIG. 9****,** endplates **3a** and **3b** are bonded **37** directly to the fuel cell cassette **1** during the sealing steps described above. Several benefits result from the use of this embodiment. Removing the need to compress the fuel cell cassette between end plates improves the reliability of the fuel cell stack and substantially decreases the weight. Also, the incorporated end plates can include fittings to further simplify the fuel cell stack. In one preferred embodiment, connections to external fuel, oxidant and coolant flows are added to the terminal plates used in the stack such that the terminal plates function as endplates for the stack.

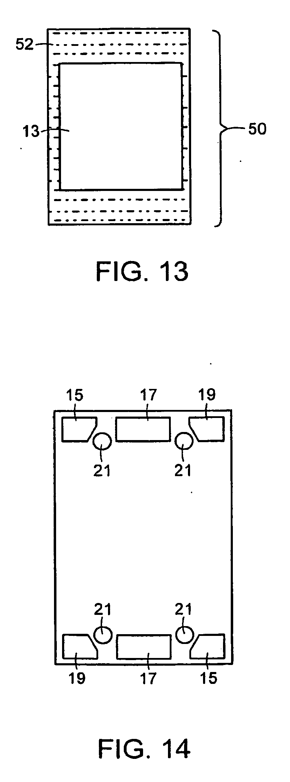

Now referring to **FIG. 13****,** certain preferred composite membrane electrode assemblies suitable for use in the fuel cell cassettes of the invention comprise a laminated membrane electrode assembly **13** which is surrounded about the periphery with a gasket **52** composed of a thermoset or thermoplastic elastomeric material. Typically preferred are membrane electrode assemblies which have a gasket composed of a thermoset material, particularly a silicone material. Composite MEAs are commercially available. See, for example, customized MEAs prepared by the 3M Fuel Cell Components Program of 3M.

Other preferred composite membrane electrode assemblies comprise a laminated membrane electrode assembly having a portion of the catalyst layer (if any) and gas diffusion layer removed from the periphery such that the ion conductive layer is exposed about the periphery of the composite membrane electrode assembly.

Now referring to **FIG 10****,** certain vacuum assisted resin transfer and pressure assisted resin transfer molding techniques may be used in certain preferred embodiments to draw the sealant (introduced from the external edge outside the stack, or through sealant holes) into the sealing channels **23.** Once the channels **23** are full of the sealant, further vacuum causes the sealant to be drawn into a portion of the GDL **54** in contact with the channel **23.** Preferably the sealant forms a non-porous composite **58** with that portion of the GDL **54** in contact with the channel **23** such that the seal is liquid or gas tight. This embodiment of the invention is preferred in that it offers ease in terms of manufacturing. In particular, it requires few modifications to the MEA prior to cassette assembly and encapsulation. Thus, it is a preferred sealing means for large volume manufacture of fuel cell cassettes. It is noted that this particular embodiment requires a fairly complex interaction between the sealant and the GDL, and may require more extensive optimization. Ideally, the sealant should completely blind the pores of the GDL (this may not be necessary in all modes of operation). This interaction can be cumbersome in development, in that it requires that the chemical properties of the GDL (particularly any surface treatments) and the sealant to be compatible (i.e. typically blinding of the pores in the GDL requires the sealant to wet the GDL well). Thus, other sealing means disclosed *infra* may be preferable for low to medium scale production, e.g., production up to about approximately 10⁴ units.

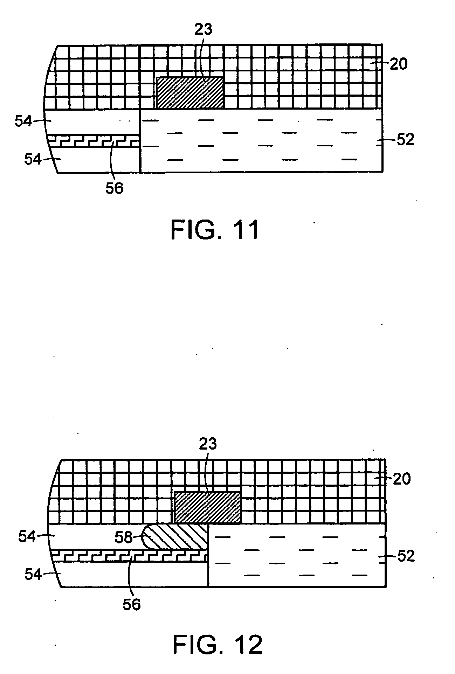

Now referring to **FIG. 11** and **FIG.12****,** some alternatives exist to the direct execution above that may be advantageous both in manufacture of electrochemical cells as well as in their development. MEA suppliers are currently manufacturing composite MEAs **50** with incorporated edge gaskets **52** and / or membrane **56** edges that extend past the GDL layers **54.** These composite MEAs **50** can be used directly in the channel sealing concept. Rather than have the sealant channel **23** adjacent to the GDL portion of the MEA **13,** it can be positioned over the gasket **52** of the composite MEA **50** (see **FIG. 11**). Sealant drawn or forced into the sealant channel **23** can then form a seal directly with the material of the gasket **52** of the composite MEA **50.** In certain embodiments this may be advantageous because it allows one to change the characteristics of the MEA (type of GDL, surface treatment) without concern for the direct interaction of the sealant and the GDL.

As provided in **FIG. 12****,** another arrangement of sealant channels **23** relative to the gasket **52** surrounding the periphery of the MEA **13** can permit the sealant to bind to the GDL **54** and to a portion of the surrounding gasket **52.** Thus, the sealing channel **23** is adjacent to the composite MEA **50** such that the channel **23** is exposed to both the gasket **52** as well as some portion of the GDL **54** (see **FIG.12**). This is advantageous because the interaction of the sealant with the edge gasket can make a reliable seal without interacting with the GDL, and the sealant is still drawn into the GDL to form a composite **58** during processing (increasing the reliability of the sealing process).

Moreover, sealing against the gasket portion of the composite MEA minimizes or prevents exposure of a portion of cross-section of an MEA surface to a reagent not being introduced into the flow field in contact with that MEA surface. More particularly, the manifold openings providing fuel and oxidant are only exposed to the gasket portion of the composite MEA which is typically not electrochemically active. Thus, the surface of the MEA which is in contact with an oxidant flow field is precluded from exposure to the fuel on that surface because the laminated GDL/MEA structure of the composite MEA is not in contact with, for example, the fuel manifold.

In cassettes comprising a coolant manifold, the manifold opening is preferably only exposed to the gasket portion of the composite MEA. Such an arrangement reduces or precludes coolant induced damage to the MEA and/or the cassette.

A novel configuration of the present invention avoids the "shorting out" process observed in some fuel cell cassettes by exposure of a portion of the same surface of the MEA to oxidant and fuel. The shorting out process, caused in significant part by exposure of a portion of the same surface of the MEA to oxidant and fuel, results in reduced power output from the MEA layer, e.g., that portion of the MEA exposed to a reagent that is not being introduced into the flow field in contact with the MEA surface results in a reduction in the effective surface area of the MEA. Consequently, the fuel cell electrical output, which is proportional to the surface area of the MEA, also decreases.

In other fuel cells of the present invention which comprise a non-composite MEA, that is an MEA in which the MEA and GDL laminate extend to the periphery of the fuel cell stack, the manifold openings through the thickness of the MEA are cut to have a maximal cross-section without interfering with the function of the sealing channels of the bipolar plate. More particularly, the manifold openings through the MEA which correspond to the fuel or oxidant manifolds have been enlarged to a cross section which is about the same geometry as the area defined inside the portion of the GDL layer which has been blinded by the sealant within the sealing channels of the bipolar plate.

Referring to **FIG. 14****,** apertures **15,17,** and **19** in the MEA which align with the fuel, oxidant and optionally the coolant manifolds have a cross section which is maximized. In that way, little or no portion of the MEA is exposed to oxidant or fuel present in the oxidant or fuel manifold. Although not wishing to be bound by theory, it appears that by minimizing the exposure of the MEA to the reactants and waste streams in the various manifolds providing reagents and coolants to various flow fields of the fuel cell provides increased electrical power generation without increasing the size of the MEA in contact with the flow fields.

In another aspect, the present invention provides stacks suitable for use in fuel cells, electrochemical or ion exchange applications. Stacks of the invention comprise at least one cassette of the present invention, and at least one end plate having openings which align with the reagent manifold openings of the cassette. Each cassette is assembled relative to each other such that the reagent manifold openings are aligned. The end plate is assembled on the top and/or bottom of the stack of fuel cell cassettes such that the openings in the end plates align with the reagent manifold openings.

The means by which the end plates and fuel cell cassettes are assembled to form the fuel cell stack provided by the present invention is not particularly limited and may include compression gasket seals and co-encapsulation in a resin and/or sealant. In preferred embodiments, the end plate is assembled with the fuel cell cassette prior to encapsulation by the resin and prior to introduction of the sealant such that the end plate and fuel cell cassette are encapsulated and sealed in combination, e.g., simultaneously.

In other preferred embodiments of the present invention, one or more fuel cell cassettes are manufactured, then aligned in a stack together with one or more compression gaskets and end plates. A compression means such as through bolt, tie downs or other mechanical fasteners are attached to the fuel cell stack to mechanically seal the fuel cell cassettes and end plates.

The layer size and number of layers in the cassettes or stacks of the invention are not particularly limited. Typically each flow field and/or membrane assembly will be between about 1 cm² and about 1 m², however larger and smaller flow field layers and/or membrane assembly layers may be suitable in certain applications. The layer size and number of layers in the fuel cell cassettes of the invention may be configured to produce a sufficient power supply for a variety of applications. Frequently the power output fuel cell cassettes and fuel cell cassettes of the invention will range from about 0.1 W to about 100 kW or more preferably from about 0.5 W to about 1 or about 10 kW. Other preferred fuel cell cassettes of the invention will range from about 5 W to about 1 kW.

The resin or sealant used for encapsulation is selected such that it has the required chemical and mechanical properties for the conditions found in an operating fuel cell system (oxidative stability, for example). Appropriate resins / sealants include both thermoplastics and thermoset elastomers. Preferred thermoplastics include thermoplastic olefin elastomers, thermoplastic, polyurethanes, plastomers, polypropylene, polyethylene, polytetrafluoroethylene, fluorinated polypropylene and polystyrene. Preferred thermoset elastomers include epoxy resins, urethanes, silicones, fluorosilicones, and vinyl esters.

The pressure differential and time required to accomplish the sealing process is a function of the materials used in the fuel cell cassette construction. These include the sealant channel geometry, the viscosity and flow characteristics of the resin, and the type of gas diffusion layer used in the MEA. Those skilled in the art will be able to judge the appropriate time and pressure based on these parameters. Those practicing the invention may also ascertain the most appropriate time and pressure by visual inspection during the sealing process with the use of transparent molds through which the resin progress can be seen in the topmost layer of the assembly.

Preferred fuel cell cassettes of the present invention are further illustrated by means of the following illustrative embodiment, which is given for the purpose of illustration only and is not meant to limit the invention to the particular components and amounts disclosed therein.

### Example 1

### Vacuum assisted resin transfer molding

Using the groove and sealant hole pattern depicted in **FIG. 3**, bipolar plates were machined in polymer graphite composite (with the oxidant flow field shown on one side and the fuel flow field on the other). MEAs were made using known processes and cut according to the pattern shown in **FIG. 7****,** e.g., cut nominally to the same outside dimensions as the bipolar plates with the same pattern of manifold holes. Six MEAs, five bipolar plates, and two terminal plates were assembled in the mold shown in **FIG. 8** in the following order: terminal plate, MEA, bipolar plate, MEA, bipolar plate, MEA, bipolar plate, MEA, bipolar plate, MEA, bipolar plate, MEA, terminal plate. The assembly was encapsulated with the silicone resin, Silastic M, (available commercially from The Dow Coming Corporation of Midland, Michigan, USA) by applying a vacuum of 23 inches Hg for approximately 90 seconds.

### Example 2 (not in accordance the invention)

### Pressure assisted resin transfer molding

A fuel cell stack was fabricated from endplates, composite MEAs and bipolar plates via encapsulation in silicone. Endplates were machined from aluminum with treaded holes corresponding to manifolds for hydrogen in and out, air in and out, and cooling in and out, as well as holes for the addition of sealant. These endplates were coated with gold to improve their contact resistance and corrosion stability, thereby functioning as endplates and current collectors. MEAs were cut from a larger 5 layer piece (membrane with catalyst and gas diffusion layer on each side) and a silicone gasket was bonded to the periphery (see figure 13 for example). Holes were punched in the gasket portion of the MEAs corresponding to the manifolds ports and sealant holes. Bipolar plates were machined from graphite polymer composite with two varieties; with a fuel and an oxidant flow fields [A-A] and with a fuel flow field and a coolant flow field [A-B]. The stack was made with the following sequence of parts:

Endplate, bipolar plate [B-A], MEA, bipolar plate [A-A], MEA, bipolar plate [A-B], bipolar plate [B-A], MEA, Bipolar plate [A-A], MEA, bipolar plate [A-B], Endplate

This assembly was placed in a mold similar to that shown in figure 8 and lightly clamped in place. A two part silicone Silastic T2, (available commercially from The Dow Coming Corporation of Midland, Michigan, USA) was pumped by hand (<5 PSI) through a static mixer into each of the four sealant ports. The uncured silicone travels through the sealant manifolds and throughout the stack via the sealant channels. The exterior of the stack was surrounded with the uncured resin by continuing to push resin through the sealant manifolds, thereby flushing out any entrained air. The stack and mold were cured quickly by one hour in a 80°C oven. Once the resulting fuel cell stack was freed from the mold, it was leak tested to 6.89·10⁴ Pa (10 PSI) to ensure adequate sealing throughout.

In some modes of operation, it may be preferable to add some clamping to this fuel cell stack (especially if the reactants are to be at pressures of greater than a few PSI). This can be accomplished by any external mechanical means. In addition, we have added screws through the interior of the stack by inserting them into the sealant holes after the sealant and encapsulation step (but before the sealant cures). The result is an internal means of compression that has been encapsulated within the fuel cell. Screws and nuts can be used, alternatively one can tread the sealant holes in the bottom endplate, such that the inserted screws will thread through the top endplate and into the bottom endplate. It may also be advantageous to add a electrically insulating layer to the screws (i.e. insulation sleeves) to prevent shorting within the stack components.

### Example 3

### Standard Injection Molding.

Few changes would be made in the above described scheme to employ automated injection molding. With the use of two part resins (e.g., the silicone used in Example 1), we have shown that the resin can be injected into the channels by a driving pressure rather than pulling a vacuum on the internal ports. For traditional injection molding of a thermoplastic resin, the mold used would have to accommodate the temperature and pressure associated. Molten resin would be injected into the injection holes and around the edges of the assembly, allowed to cool and harden. Injection velocity profile, pack pressure, and cooling time would be optimized to minimize the possibility of component damage as well as to control shrinkage / warpage ensuring sealing of the final part. Lastly, the fuel cell cassette would be removed from the mold.

## Claims

1. An electrochemical cassette comprising:
at least one membrane electrode assembly (13, 40) adapted for contact with at least two plates, each plate comprising one or more flow fields, each of which comprises at least one groove, the flow fields being selected from the group consisting of an oxidant flow field (74), a fuel flow field (72), and a coolant flow field (84);
wherein each membrane electrode assembly (13, 40) and each plate comprise at least one oxidant manifold opening and at least one fuel manifold opening wherein each respective manifold opening extends through the thickness of the cassette;
wherein each plate has at least one sealant channel (23) which extends through at least a portion of the thickness thereof;
wherein the one or more membrane electrode assemblies (13, 40) and plates are assembled and encapsulated about the periphery thereof by a sealant; said electrochemical cassette being **characterized in that**
the sealant contemporaneously seals the respective channels (23) of the one or more plates to selectively block those reactant manifold openings which are not intended to deliver material to a particular flow field;
at least a portion of the sealant channels (23) are open to the peripheral edge of one or more plates of the cassette such that the sealant is introduced into the sealant channel (23) during encapsulation of the cassette.

2. The electrochemical cassette of claim 1, wherein each membrane electrode assembly (13, 40) and each plate further comprise at least one coolant manifold opening wherein each coolant manifold opening extends through the thickness of the cassette.

3. The electrochemical cassette of claim 1, wherein each plate has zero or one oxidant flow field (74) and has zero or one fuel flow field (72).

4. The electrochemical cassette of claim 1, wherein each membrane electrode assembly (13, 40) is in contact with a fuel flow field (72) and an oxidant flow field (74).

5. The electrochemical cassette according to any one of claims 1 through 4, wherein the electrochemical cassette is a fuel cell cassette (1).

6. The fuel cell cassette (1) of claim 5, wherein each manifold opening is an opening having a cross section which is substantially the same as the area defined by the channel surrounding the manifold opening and the periphery of the plate.

7. The electrochemical cassette of claim 2, comprising at least one plate having a coolant flow field (84).

8. The electrochemical cassette of claim 2, comprising a first plate having a first coolant flow field (84) and a second plate having a second coolant flow field (84) which are aligned such that the first and second flow fields (84) are in contact.

9. The fuel cell cassette (1) of claim 5, wherein at least one sealant channel (23) is interposed between each membrane electrode assembly (13, 40) and each plate or between adjacent plates.

10. The fuel cell cassette (1) of claim 5, wherein each flow field comprises a plurality of interconnected grooves extending through a portion of the plate through which material can flow.

11. The fuel cell cassette (1) of claim 5, wherein each membrane electrode assembly (13, 40) comprises an ion conductive layer interposed between two gas diffusion layers (54) which comprise a catalyst.

12. The fuel cell cassette (1) of claim 11, wherein each membrane electrode assembly (13, 40) has substantially the same cross section as the fuel cell cassette (1).

13. The fuel cell cassette (1) of claim 11, wherein each membrane electrode assembly (13, 40) comprises a composite membrane electrode assembly (50) having an ion conductive layer interposed between gas diffusion layers (54) and a gasket (52) surrounding the periphery of the laminate.

14. The fuel cell cassette (1) of claim 13, wherein at least a portion of the sealant channel (23) is adjacent to the gasket (52) of the membrane electrode assembly (13, 40).

15. The fuel cell cassette (1) of claim 13, wherein the sealant channel (23) is adjacent to the interface of the gasket (52) and laminate of the membrane electrode assembly (13, 40).

16. The fuel cell cassette (1) of claim 13, wherein substantially the entire sealant channel (23) is in contact with the gasket (52) of the membrane electrode assembly (13, 40).

17. The fuel cell cassette (1) of claim 13, wherein substantially the entire sealant channel (23) is in contact with the gas diffusion layer (54) of the membrane electrode assembly (13, 40).

18. The electrochemical cassette according to any one of claims 1 through 4, wherein the sealant is a thermoset or thermoplastic material.

19. The electrochemical cassette of claim 18, wherein the thermoplastic material is selected from the group consisting of thermoplastic olefin elastomers, thermoplastic polyurethane, plastomer, polypropylene, polyethylene, polytetrafluoroethylene, fluorinated polypropylene and polystyrene.

20. The electrochemical cassette of claim 18, wherein the sealant has a viscosity of between 10 Pa·s (10,000 cP) and 150 Pa·s (150,000 cP).

21. The electrochemical cassette of claim 18, wherein the sealant has a viscosity of between 10 Pa·s (10,000 cP) and 55 Pa·s (55,000 cP).

22. The electrochemical cassette of claim 18, wherein the thermoset material is selected from the group consisting of epoxy resins, urethanes, silicones, fluorosilicones, and vinyl esters.

## Patentansprüche

1. Elektrochemische Kassette, umfassend:
wenigstens eine Membranelektrodenanordnung (13, 40), die für einen Kontakt mit wenigstens zwei Platten angepasst ist, wobei jede Platte ein oder mehrere Strömungsfelder umfasst, von denen jedes wenigstens eine Rille umfasst, wobei die Strömungsfelder aus der Gruppe, bestehend aus einem Oxidationsmittel-Strömungsfeld (74), einem Brennstoff-Strömungsfeld (72) und einem Kühlmittel-Strömungsfeld (84), ausgewählt sind;
wobei jede Membranelektrodenanordnung (13, 40) und jede Platte wenigstens eine Oxidationsmittel-Verteilungsöffnung und wenigstens eine Brennstoff-Verteilungsöffnung umfassen, wobei jede entsprechende Verteilungsöffnung sich durch die Dicke der Kassette erstreckt;
wobei jede Platte wenigstens einen Dichtungsmittelkanal (23) hat, der sich durch wenigstens einen Teil der Dicke davon erstreckt;
wobei die eine oder die mehreren Membranelektrodenanordnungen (13, 40) und Platten zusammengebaut sind und entlang des Umfangs mit einem Dichtungsmittel eingekapselt sind; wobei die elektrochemische Kassette **dadurch gekennzeichnet ist, dass**
das Dichtungsmittel gleichzeitig die jeweiligen Kanäle (23) der einen oder mehreren Platten versiegelt, um selektiv die Reaktanten-Verteilungsöffnungen zu blockieren, die nicht dazu bestimmt sind, Material an ein bestimmtes Strömungsfeld abzugeben;
wenigstens ein Teil der Dichtungsmittelkanäle (23) zum Umfangsrand einer oder mehrerer Platten der Kassette offen ist, sodass das Dichtungsmittel während der Einkapselung der Kassette in den Dichtungsmittelkanal (23) eingeführt wird.

2. Elektrochemische Kassette gemäß Anspruch 1, wobei jede Membranelektrodenanordnung (13, 40) und jede Platte außerdem wenigstens eine Kühlmittel-Verteilungsöffnung umfasst, wobei sich jede Kühlmittel-Verteilungsöffnung durch die Dicke der Kassette erstreckt.

3. Elektrochemische Kassette gemäß Anspruch 1, wobei jede Platte null oder ein Oxidationsmittel-Strömungsfeld (74) hat und null oder ein Brennstoff-Strömungsfeld (72) hat.

4. Elektrochemische Kassette gemäß Anspruch 1, wobei jede Membranelektrodenanordnung (13, 40) mit einem Brennstoff-Strömungsfeld (72) und einem Oxidationsmittel-Strömungsfeld (74) in Kontakt ist.

5. Elektrochemische Kassette gemäß einem der Ansprüche 1 bis 4, wobei die elektrochemische Kassette eine Brennstoffzellenkassette (1) ist.

6. Brennstoffzellenkassette (1) gemäß Anspruch 5, wobei jede Verteilungsöffnung eine Öffnung ist, die einen Querschnitt hat, der im Wesentlichen der selbe ist wie die Fläche, die durch den Kanal definiert wird, der die Verteilungsöffnung und den Umfang der Platte umgibt.

7. Elektrochemische Kassette gemäß Anspruch 2, die wenigstens eine Platte umfasst, die ein Kühlmittel-Strömungsfeld (84) hat.

8. Elektrochemische Kassette gemäß Anspruch 2, die eine erste Platte, welche ein erstes Kühlmittel-Strömungsfeld (84) hat, und eine zweite Platte, die ein zweites Kühlmittel-Strömungsfeld (84) hat, umfasst, welche so ausgerichtet sind, dass das erste und das zweite Strömungsfeld (84) in Kontakt sind.

9. Brennstoffzellenkassette (1) gemäß Anspruch 5, wobei wenigstens ein Dichtungsmittelkanal (23) zwischen jeder Membranelektrodenanordnung (13, 40) und jeder Platte oder zwischen benachbarten Platten angeordnet ist.

10. Brennstoffzellenkassette (1) gemäß Anspruch 5, wobei jedes Strömungsfeld eine Vielzahl von untereinander verbundenen Rillen umfasst, die sich durch einen Teil der Platte erstrecken, durch welche Material fließen kann.

11. Brennstoffzellenkassette (1) gemäß Anspruch 5, wobei jede Membranelektrodenanordnung (13, 40) eine ionenleitende Schicht umfasst, die zwischen zwei Gasdiffusionsschichten (54), welche einen Katalysator umfassen, angeordnet ist.

12. Brennstoffzellenkassette (1) gemäß Anspruch 11, wobei jede Membranelektrodenanordnung (13, 40) im Wesentlichen den selben Querschnitt wie die Brennstoffzellenkassette (1) hat.

13. Brennstoffzellenkassette (1) gemäß Anspruch 11, wobei jede Membranelektrodenanordnung (13, 40) eine Verbundmembranelektrodenanordnung (50) umfasst, die eine ionenleitende Schicht zwischen Gasdiffusionsschichten (54) angeordnet hat und eine Dichtung (52), die den Umfang des Laminats umgibt, hat.

14. Brennstoffzellenkassette (1) gemäß Anspruch 13, wobei wenigstens ein Teil des Dichtungsmittelkanals (23) der Dichtung (52) der Membranelektrodenanordnung (13, 40) benachbart ist.

15. Brennstoffzellenkassette (1) gemäß Anspruch 13, wobei der Dichtungsmittelkanal (23) benachbart zur Grenzfläche der Dichtung (52) und des Laminats der Membranelektrodenanordnung (13, 40) ist.

16. Brennstoffzellenkassette (1) gemäß Anspruch 13, wobei im Wesentlichen der gesamte Dichtungsmittelkanal (23) in Kontakt mit der Dichtung (52) der Membranelektrodenanordnung (13, 40) ist.

17. Brennstoffzellenkassette (1) gemäß Anspruch 13, wobei im Wesentlichen der gesamte Dichtungsmittelkanal (23) in Kontakt mit der Gasdiffusionsschicht (54) der Membranelektrodenanordnung (13, 40) ist.

18. Elektrochemische Kassette gemäß einem der Ansprüche 1 bis 4, wobei das Dichtungsmittel ein wärmehärtendes oder thermoplastisches Material ist.

19. Elektrochemische Kassette gemäß Anspruch 18, wobei das thermoplastische Material aus der Gruppe, bestehend aus thermoplastischen Olefinelastomeren, thermoplastischem Polyurethan, Plastomer, Polypropylen, Polyethylen, Polytetrafluorethylen, fluoriertem Polypropylen und Polystyrol, ausgewählt ist.

20. Elektrochemische Kassette gemäß Anspruch 18, wobei das Dichtungsmittel eine Viskosität von zwischen 10 Pa·s (10.000 cP) und 150 Pa·s (150.000 cP) hat.

21. Elektrochemische Kassette gemäß Anspruch 18, wobei das Dichtungsmittel eine Viskosität von zwischen 10 Pa·s (10.000 cP) und 55 Pa·s (55.000 cP) hat.

22. Elektrochemische Kassette gemäß Anspruch 18, wobei das wärmehärtende Material aus der Gruppe, bestehend aus Epoxidharzen, Urethanen, Silikonen, Fluorsilikonen und Vinylestern, ausgewählt ist.

## Revendications

1. Cassette électrochimique comprenant :
au moins un ensemble membrane-électrode (13, 40) adapté pour un contact avec au moins deux plaques, chaque plaque comprenant un ou plusieurs champs d'écoulement, dont chacun comprend au moins une rainure, les champs d'écoulement étant choisis dans le groupe constitué par un champ d'écoulement d'oxydant (74), un champ d'écoulement de combustible (72) et un champ d'écoulement de fluide de refroidissement (84) ;
dans laquelle chaque ensemble membrane-électrode (13, 40) et chaque plaque comprennent au moins une ouverture de collecteur d'oxydant et au moins une ouverture de collecteur de combustible où chaque ouverture de collecteur respective s'étend sur l'épaisseur de la cassette ;
dans laquelle chaque plaque comporte au moins un canal de colmatage (23) qui s'étend sur au moins une partie de son épaisseur;
dans laquelle les un ou plusieurs ensembles membrane-électrode (13, 40) et les plaques sont assemblés et encapsulés autour de leur périphérie par un colmatant ; ladite cassette électrochimique étant **caractérisée en ce que**
le colmatant colmate simultanément les canaux (23) respectifs des une ou plusieurs plaques pour bloquer sélectivement les ouvertures de collecteur de réactif qui ne sont pas destinées à délivrer un matériau à un champ d'écoulement particulier ;
au moins une partie des canaux de colmatage (23) est ouverte vers le bord périphérique d'une ou plusieurs plaques de la cassette de telle sorte que le colmatant est introduit dans le canal de colmatage (23) pendant l'encapsulation de la cassette.

2. Cassette électrochimique selon la revendication 1, dans laquelle chaque ensemble membrane-électrode (13, 40) et chaque plaque comprennent en outre au moins une ouverture de collecteur de fluide de refroidissement dans laquelle chaque ouverture de collecteur de fluide de refroidissement s'étend à travers l'épaisseur de la cassette.

3. Cassette électrochimique selon la revendication 1, dans laquelle chaque plaque a zéro ou un champ d'écoulement d'oxydant (74) et a zéro ou un champ d'écoulement de combustible (72).

4. Cassette électrochimique selon la revendication 1, dans laquelle chaque ensemble membrane-électrode (13, 40) est en contact avec un champ d'écoulement de combustible (72) et un champ d'écoulement d'oxydant (74).

5. Cassette électrochimique selon l'une quelconque des revendications 1 à 4, dans laquelle la cassette
électrochimique est une cassette à pile à combustible (1) .

6. Cassette à pile à combustible (1) selon la revendication 5, dans laquelle chaque ouverture de collecteur est une ouverture ayant une section en coupe qui est sensiblement la même que l'aire définie par le canal entourant l'ouverture de collecteur et la périphérie de la plaque.

7. Cassette électrochimique selon la revendication 2, comprenant au moins une plaque ayant un champ d'écoulement de fluide de refroidissement (84).

8. Cassette électrochimique selon la revendication 2, comprenant une première plaque ayant un premier champ d'écoulement de fluide de refroidissement (84) et une seconde plaque ayant un second champ d'écoulement de fluide de refroidissement (84) qui sont alignées de telle sorte que les premier et second champs d'écoulement (84) sont en contact.

9. Cassette à pile à combustible (1) selon la revendication 5, dans laquelle au moins un canal de colmatage (23) est interposé entre chaque ensemble membrane-électrode (13, 40) et chaque plaque ou entre des plaques adjacentes.

10. Cassette à pile à combustible (1) selon la revendication 5, dans laquelle chaque champ d'écoulement comprend une pluralité de rainures interconnectées s'étendant à travers une partie de la plaque à travers laquelle le matériau peut s'écouler.

11. Cassette à pile à combustible (1) selon la revendication 5, dans laquelle chaque ensemble membrane-électrode (13, 40) comprend une couche
conductrice des ions interposée entre deux couches de diffusion de gaz (54) qui comprennent un catalyseur.

12. Cassette à pile à combustible (1) selon la revendication 5, dans laquelle chaque ensemble membrane-électrode (13, 40) a sensiblement la même section en coupe que la cassette à pile à combustible (1).

13. Cassette à pile à combustible (1) selon la revendication 11, dans laquelle chaque ensemble membrane-électrode (13, 40) comprend un ensemble membrane-électrode composite (50) ayant une couche conductrice des ions interposée entre des couches de diffusion de gaz (54) et une garniture d'étanchéité (52) entourant la périphérie du stratifié.

14. Cassette à pile à combustible (1) selon la revendication 13, dans laquelle au moins une partie du canal de colmatage (23) est adjacente à la garniture d'étanchéité (52) de l'ensemble membrane-électrode (13, 40).

15. Cassette à pile à combustible (1) selon la revendication 13, dans laquelle le canal de colmatage (23) est adjacent à l'interface de la garniture d'étanchéité (52) et du stratifié de l'ensemble membrane-électrode (13, 40).

16. Cassette à pile à combustible (1) selon la revendication 13, dans laquelle quasiment l'intégralité du canal de colmatage (23) est en contact avec la garniture d'étanchéité (52) de l'ensemble membrane-électrode (13, 40).

17. Cassette à pile à combustible (1) selon la revendication 13, dans laquelle quasiment l'intégralité du canal de colmatage (23) est en contact avec la couche de diffusion de gaz (54) de l'ensemble membrane-électrode (13, 40).

18. Cassette électrochimique selon l'une quelconque des revendications 1 à 4, dans laquelle le colmatant est un matériau thermodurcissable ou thermoplastique.

19. Cassette électrochimique selon la revendication 18, dans laquelle le matériau thermoplastique est choisi dans le groupe constitué par les élastomères d'oléfine thermoplastiques, le poly(uréthane) thermoplastique, un plastomère, le poly(propylène), le poly(éthylène), le poly(tétrafluoroéthylène), le poly(propylène) fluoré et le poly(styrène).

20. Cassette électrochimique selon la revendication 18, dans laquelle le colmatant a une viscosité comprise entre 10 Pa·s (10 000 cP) et 150 Pa·s (150 000 cP).

21. Cassette électrochimique selon la revendication 18, dans laquelle le colmatant a une viscosité comprise entre 10 Pa.s (10 000 cP) et 55 Pa-s (55 000 cP).

22. Cassette électrochimique selon la revendication 18, dans laquelle le matériau thermodurcissable est choisi dans le groupe constitué par les résines époxy, les uréthanes, les silicones, les fluorosilicones et les esters de vinyle.
